# EUROPÄISCHE PATENTANMELDUNG

(11) **EP 4 682 576 A1**
(43) Veröffentlichungstag der Anmeldung: **21.01.2026**
(21) Anmeldenummer: 25186860.0
(22) Anmeldetag: 02.07.2025
(51) Int. Cl.: G01S 7/41, G01S 13/88, G01S 13/02, G01B 15/02, G01N 22/02

(54) **VERFAHREN ZUM BESTIMMEN EINER ZUSAMMENSETZUNG EINES BAUTEILS**

(30) Priorität: 18.07.2024 DE 102024206766
(71) Anmelder: Robert Bosch GmbH, 70442 Stuttgart (DE)
(72) Erfinder: Sgarz, Heiko, 71229 Leonberg (DE)

(57) **Zusammenfassung**

Die Erfindung betrifft ein Verfahren (100) zum Bestimmen einer Zusammensetzung eines Bauteils (1), umfassend die nachfolgenden Schritte:
- Bereitstellen (101) von Radardaten, wobei die Radardaten aus einer Erfassung eines Sensors (2) resultieren, wobei der Sensor (2) in einem Bereich des Bauteils (1) angeordnet ist und für die Erfassung ein Radarsignal in Richtung des Bauteils (1) aussendet,
- Auswählen (102) eines Analyseverfahrens für das Bestimmen der Zusammensetzung des Bauteils (1) in Abhängigkeit von einer Dicke des Bauteils (1) und/oder einer Anzahl an Schichten (3) und/oder einer Dicke der Schichten (3) des Bauteils (1),
- Bestimmen (103) der Zusammensetzung des Bauteils (1) unter Verwendung des ausgewählten Analyseverfahrens,
wobei das ausgewählte Analyseverfahren zum Bestimmen (103) der Zusammensetzung des Bauteils (1) die folgenden Schritte umfasst:
- Detektieren wenigstens einer Reflexion auf Basis der bereitgestellten Radardaten,
- Bestimmen einer Permittivität und einer Dicke wenigstens einer Schicht (3) des Bauteils (1) auf Basis der wenigstens einen detektierten Reflexion,
- Bereitstellen einer Beschreibung der wenigstens einen Schicht (3) des Bauteils (1) auf Basis der bestimmten Permittivität und Dicke.
Ferner betrifft die Erfindung ein Computerprogramm, eine Vorrichtung, ein Speichermedium sowie ein Ortungsgerät zu diesem Zweck.

## Beschreibung

Die Erfindung betrifft ein Verfahren zum Bestimmen einer Zusammensetzung eines Bauteils. Ferner betrifft die Erfindung ein Computerprogramm, eine Vorrichtung, ein Speichermedium sowie ein Ortungsgerät zu diesem Zweck.

### Stand der Technik

Ortungsgeräte, insbesondere Radar-Ortungsgeräte, können Objekte in Bauteilen wie beispielsweise Wänden, Decken oder Böden orten. Diese Information kann hilfreich sein, um zu vermeiden, dass Objekte angebohrt werden und in dem Fall ein größerer Schaden angerichtet würde. Allerdings sind die Ortungsgeräte im Stand der Technik insbesondere auf das Orten der Objekte beschränkt und es wird keine Information über einen Aufbau des Bauteils selbst ermittelt.

In manchen Ländern ist es verpflichtend, beim Verkauf einer Immobilie ein Gutachten anfertigen zu lassen. Dabei spielt eine Zusammensetzung, bzw. ein Aufbau von Bauteilen eine wichtige Rolle. Aktuell muss diese Zusammensetzung teilweise zerstörend über das Bohren von Löchern und optische Inspektion mit Inspektionskameras bestimmt werden.

### Offenbarung der Erfindung

Gegenstand der Erfindung ist ein Verfahren mit den Merkmalen des Anspruchs 1, ein Computerprogramm mit den Merkmalen des Anspruchs 10, eine Vorrichtung mit den Merkmalen des Anspruchs 11, ein computerlesbares Speichermedium mit den Merkmalen des Anspruchs 12 sowie ein Ortungsgerät mit den Merkmalen des Anspruchs 13. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung, dem erfindungsgemäßen computerlesbaren Speichermedium sowie dem erfindungsgemäßen Ortungsgerät, und jeweils umgekehrt, so dass bezüglich der Offenbarung der Erfindung stets auch eine wechselseitige Bezugnahme möglich ist.

Gegenstand der Erfindung ist insbesondere ein Verfahren zum Bestimmen einer Zusammensetzung eines Bauteils, umfassend die nachfolgenden Schritte, wobei die Schritte wiederholt und/oder nacheinander durchgeführt werden können. Das Bauteil kann beispielsweise eine Wand, eine Decke oder ein Boden sein, beispielsweise in einem Gebäude. Die Zusammensetzung kann auch als Aufbau bezeichnet und verstanden werden und bezeichnet vereinfacht ausgedrückt aus wie vielen Schichten das Bauteil aufgebaut ist und wie dick diese Schichten jeweils sind.

In einem ersten Schritt werden vorzugsweise Radardaten bereitgestellt, wobei die Radardaten aus einer Erfassung eines Sensors resultieren, wobei der Sensor in einem Bereich des Bauteils angeordnet ist und für die Erfassung ein Radarsignal in Richtung des Bauteils aussendet. Der Sensor ist insbesondere ein Radarsensor. Der Radarsensor kann verwendet werden, indem er elektromagnetische Wellen aussendet und die reflektierten Wellen empfängt. Wenn sich ein Objekt in der Nähe des Sensors befindet, wird insbesondere ein Teil der ausgesandten Wellen vom Objekt reflektiert und zurück zum Sensor geleitet. Der Sensor erfasst dann vorzugsweise die reflektierten Wellen und kann anhand einer Laufzeit und Stärke der reflektierten Signale Positionen und Größen von Objekten bestimmen. Der Sensor kann Teil des erfindungsgemäßen Ortungsgerätes sein, das auch das nachstehend beschriebene Display umfassen kann. Dass der Sensor in einem Bereich des Bauteils angeordnet ist, kann insbesondere indizieren, dass der Sensor sich in einer Nähe zu dem Bauteil befindet. Dafür kann beispielsweise das Ortungsgerät an das Bauteil angelegt werden, beispielsweise gegen eine Oberfläche des Bauteils.

In einem weiteren Schritt wird vorzugsweise ein Analyseverfahren für das Bestimmen der Zusammensetzung des Bauteils in Abhängigkeit von einer Dicke des Bauteils und/oder einer Anzahl an Schichten und/oder einer Dicke der Schichten des Bauteils ausgewählt. Diese Parameter der Dicke des Bauteils und/oder der Anzahl an Schichten und/oder der Dicke der Schichten des Bauteils können beispielsweise aufgrund eines Vorwissens bekannt und vordefiniert sein, bzw. kann eine ungefähre Vorstellung hinsichtlich dieser Parameter gegeben sein. Alternativ kann eine zufällige oder freie Auswahl des Analyseverfahrens erfolgen, wenn kein Vorwissen über diese Parameter gegeben ist. Auch ist denkbar, dass immer das erste oder immer das zweite Analyseverfahren ausgewählt wird, wenn kein Vorwissen über diese Parameter gegeben ist. Dadurch kann vorteilhaft ein jeweils zu den gegebenen Umständen passendes Analyseverfahren bereitgestellt werden, das ausreichend präzise ist und dabei keinen unnötig hohen Rechenaufwand erfordert. Insbesondere wird dabei das erste oder das zweite nachstehend aufgeführte Analyseverfahren ausgewählt. Bei dem zweiten Analyseverfahren gemäß der Erfindung kann sich die Schwierigkeit ergeben, dass viele Parameter auf einmal betrachtet werden müssen. Dieses kann sich daher eher für Fälle eignen, bei denen schon eine Vorabinformation hinsichtlich der Zusammensetzung des Bauteils vorhanden ist und es sich um wenige Schichten handelt. Zudem kann es dann Vorteile haben, wenn die Zusammensetzung des Bauteils derart dünne Schichten enthält, dass diese von dem Sensor nicht mehr aufgelöst werden können. Dies kann problematisch für das erste Analyseverfahren gemäß der Erfindung sein. Zumindest auf Basis dieser Aspekte kann eines der Analyseverfahren ausgewählt werden, wobei die Auflistung nicht abschließend ist.

In einem weiteren Schritt wird vorzugsweise die Zusammensetzung des Bauteils unter Verwendung des ausgewählten Analyseverfahrens bestimmt. Dabei umfasst das ausgewählte Analyseverfahren zum Bestimmen der Zusammensetzung des Bauteils vorzugsweise die folgenden Schritte:
- Detektieren wenigstens einer Reflexion auf Basis der bereitgestellten Radardaten,
- Bestimmen einer Permittivität und einer Dicke wenigstens einer Schicht des Bauteils auf Basis der detektierten wenigstens einen Reflexion,
- Bereitstellen einer Beschreibung der wenigstens einen Schicht des Bauteils auf Basis der bestimmten Permittivität und Dicke.

Dabei wird ferner vorzugsweise im Rahmen des ausgewählten Analyseverfahrens eine Zeitdifferenz zwischen Reflexionen und eine Ausbreitungsgeschwindigkeit in Abhängigkeit von der Permittivität berücksichtigt. Die Beschreibung der Zusammensetzung umfasst beispielsweise eine Anzahl an Schichten, eine Dicke der jeweiligen Schichten, eine Permittivität der jeweiligen Schichten und/oder ein Material der jeweiligen Schichten. So kann vorteilhaft zerstörungsfrei auf Basis des Radarsignals die Zusammensetzung des Bauteils differenziert bestimmt werden.

Es ist möglich, dass das Verfahren ferner den folgenden Schritt umfasst:
- Initiieren einer Anzeige der bestimmten Zusammenfassung auf einem Display, wobei die Anzeige zumindest die Dicke des Bauteils und/oder die Anzahl an Schichten und/oder die Dicke der Schichten des Bauteils umfasst, wobei die Anzeige vorzugsweise ferner eine Permittivität einer jeweiligen Schicht und/oder ein auf Basis der Permittivität ermitteltes Material der jeweiligen Schicht umfasst.

Diese Funktion kann es Anwendern vorteilhaft ermöglichen, die Zusammensetzung des Bauteils zu visualisieren und eine klare und übersichtliche Darstellung des Bauteilquerschnitts, d.h. der Zusammensetzung, zu erhalten. Diese Darstellung kann ein schnelles Verständnis und eine schnelle Analyse der Zusammensetzung des Bauteils ermöglichen. Darüber hinaus kann die Anzeige auch Informationen über die Permittivität liefern, was bei der Bestimmung der elektrischen Eigenschaften der Schichten des Bauteils hilfreich sein kann. Die Darstellung kann auch den Vergleich und die Analyse zwischen verschiedenen Komponenten oder Strukturen erleichtern, so dass der Anwender Muster, Trends und Korrelationen erkennen kann. Ferner kann die Möglichkeit, die Zusammensetzung von Bauteilen zu visualisieren, auch die Identifizierung potenzieller Probleme oder Problembereiche ermöglichen, wie z.B. beschädigte oder degradierte Materialien, was beispielsweise für die Gewährleistung der öffentlichen Sicherheit und die Vermeidung kostspieliger Reparaturen oder Ersatzinvestitionen von Bedeutung sein kann.

Es ist ferner denkbar, dass ein erstes Analyseverfahren für das Auswählen, bzw. ein erstes Analyseverfahren, das im Rahmen des Auswählens ausgewählt werden kann, die folgenden Schritte umfasst:
- Bestimmen einer Reflexion einer ersten Schicht des Bauteils, insbesondere durch eine Analyse der Radardaten, wobei die Reflexion sich durch eine erhöhte Signalstärke in den Radardaten äußern kann,
- Bestimmen einer Permittivität der ersten Schicht auf Basis der bestimmten Reflexion,
- Ermitteln einer Zeitdifferenz zwischen der ersten und einer zweiten Reflexion, insbesondere durch eine Analyse der Radardaten, wobei die zweite Reflexion sich durch eine weitere, im Hinblick auf die erste Reflexion zeitlich nachgelagerte, erhöhte Signalstärke in den Radardaten äußern kann,
- Bestimmen einer Dicke der ersten Schicht auf Basis der bestimmten Permittivität und der ermittelten Zeitdifferenz,
- Entfernen eines Anteils der Radardaten, welcher die erste Schicht repräsentiert, indem Streuparameter der ersten Schicht auf Basis der bestimmten Permittivität und der Dicke der ersten Schicht bestimmt werden und diese anschließend von verketteten Streuparametern der Radardaten abgezogen werden, um Radardaten zu erhalten, die die Zusammensetzung des Bauteils ohne die erste Schicht repräsentieren.

Dabei können die Schritte für weitere Schichten des Bauteils wiederholt werden, bis ein definiertes Abbruchkriterium erfüllt ist. Die Bestimmung der Permittivität erfolgt dabei insbesondere durch ein Aussenden eines Radarsignals und Empfang des reflektierten Signals, einer Messung einer Laufzeit des Signals und Analyse der Reflexionskoeffizienten. Anschließend kann die Permittivität anhand der gemessenen Laufzeit und Signalstärke berechnet werden.

Die Streuparameter beschreiben insbesondere, wie eingehende Signale an Ports eines Netzwerks in reflektierte und durchgelassene Signale umgewandelt werden, wobei insbesondere das verwendete erfindungsgemäße Ortungsgerät diese Ports aufweist. Für ein Netzwerk mit n Ports gibt es beispielsweise insgesamt n² Streuparameter. Streuparameter für ein Zweitor-Netzwerk sind beispielsweise die Folgenden: S11 (Reflexionsfaktor): Gibt insbesondere ein Verhältnis der reflektierten Leistung zur eingehenden Leistung am Port 1 an. S21 (Transmissionsfaktor): Gibt insbesondere ein Verhältnis der am Port 2 empfangenen Leistung zur am Port 1 eingespeisten Leistung an. S12 (Transmissionsfaktor): Gibt insbesondere ein Verhältnis der am Port 1 empfangenen Leistung zur am Port 2 eingespeisten Leistung an. S22 (Reflexionsfaktor): Gibt insbesondere ein Verhältnis der reflektierten Leistung zur eingehenden Leistung am Port 2 an. Streuparameter können verwendet werden, um eine Wechselwirkung eines Radarsignals mit Objekten oder Materialien zu analysieren. Dies kann beispielsweise eine Analyse der reflektierten Signale umfassen, um Informationen über die Oberfläche oder Struktur des Objekts zu erhalten. Ferner kann eine Untersuchung der durch das Material hindurchgehenden Signale erfolgen, um die Permittivität zu bestimmen. Zudem kann eine Untersuchung der Verteilung der reflektierten und gestreuten Signale zur Charakterisierung einer Form und Beschaffenheit von Objekten erfolgen.

Die Messung der Streuparameter erfolgt beispielsweise mithilfe eines Vektornetzwerkanalysators (VNA). Dieser sendet insbesondere ein Signal an das Netzwerk und misst die reflektierten und übertragenen Signale an den verschiedenen Ports. Die S-Parameter werden dann vorzugsweise als Funktionen der Frequenz dargestellt.

Ferner kann vorgesehen sein, dass auf Basis der bestimmten Permittivität zusätzlich ein Material der jeweiligen Schicht ermittelt wird. Durch die bestimmte Permittivität kann vorteilhaft das Material bestimmt werden, da jedes Material eine spezifische Permittivität aufweist. Dementsprechend kann auf Basis der bestimmten Permittivität eine entsprechende Zuordnung, beispielsweise anhand einer Referenztabelle, erfolgen.

Das Abbruchkriterium kann eine vorher definierte maximale Anzahl an Schichten und/oder ein Kriterium abhängig von einer Größe der verbleibenden Radardaten nach Abzug aller bis dahin analysierten Schichten sein. Das Abbruchkriterium vorzugeben kann vorteilhaft eine effizientere Verarbeitung und einen geringeren Rechenaufwand ermöglichen.

Zudem kann ein zweites Analyseverfahren für das Auswählen, bzw. ein zweites Analyseverfahren, das im Rahmen des Auswählens ausgewählt werden kann, die folgenden Schritte umfassen:
- Definieren eines Startpunktes, wobei der Startpunkt eine vermutete Zusammensetzung des Bauteils mit einer definierten Anzahl an Schichten mit jeweiligen Permittivitäten Dicken der Schichten ist,
- Berechnen von Streuparametern jeder Schicht und Verketten der berechneten Streuparameter, um theoretische Radardaten des Startpunktes zu erhalten,
- Vergleichen der theoretischen Radardaten mit den bereitgestellten Radardaten, um einen Fehler zu bestimmen,
- Bestimmen einer Laufrichtung auf Basis des bestimmten Fehlers, wobei die Laufrichtung eine Veränderung des Startpunktes repräsentiert, die zu einer Verringerung des Fehlers führt.

Dabei können die Schritte durchgeführt werden, bis der Fehler unter ein definiertes Maximum fällt. Die vermutete Zusammensetzung des Bauteils, d.h. der Startpunkt, kann zufällig oder auf Basis eines Vorwissens über das Bauteil definiert werden. Die Streuparameter können wie voranstehend beschrieben berechnet werden. In anderen Worten wird mit diesem Verfahren die Zusammensetzung des Bauteils iterativ ermittelt, indem der Startpunkt aufgrund des Vergleichs zwischen theoretischen und tatsächlichen Radardaten angepasst wird. Durch wiederholtes Anpassen des Startpunktes und Vergleichen der theoretischen und tatsächlichen Radardaten kann mit dem zweiten Analyseverfahren die korrekte Zusammensetzung des Bauteils ermittelt werden.

Ferner ist denkbar, dass mehrere Startpunkte definiert werden und ein jeweiliger Fehler der definierten Startpunkte berechnet wird, wobei ausgehend von einem Startpunkt mit einem kleinsten berechneten Fehler die Schritte des Berechnens der Streuparameter, des Vergleichens der theoretischen Radardaten mit den bereitgestellten Radardaten und des Bestimmens der Laufrichtung durchgeführt werden, bis der Fehler unter das definierte Maximum fällt. So kann vorteilhaft parallelisiert mit mehreren möglichen vermuteten Zusammensetzungen des Bauteils gestartet werden, wodurch die tatsächliche Zusammensetzung des Bauteils deutlich schneller bestimmt werden kann.

Auch kann optional das Bereitstellen der Radardaten die folgenden Schritte umfassen:
- Erfassen der Radardaten unter Verwendung des Sensors, wobei der Sensor in einem Bereich des Bauteils angeordnet ist und für die Erfassung das Radarsignal in Richtung des Bauteils aussendet,
- Analysieren der erfassten Radardaten, um eine Objektdetektion in dem Bauteil durchzuführen,
- Verwerfen der erfassten Radardaten, wenn ein Ergebnis der Analyse indiziert, dass ein Objekt detektiert wurde.

So kann vorteilhaft vermieden werden, dass gestörte Radardaten für das Bestimmen der Zusammensetzung des Bauteils verwendet werden, da ein Objekt in dem Bauteil zu Störungen und somit zu veränderten Radardaten führen kann.

Es ist auch denkbar, dass das Bereitstellen der Radardaten die folgenden Schritte umfasst:
- Erfassen der Radardaten unter Verwendung des Sensors, wobei der Sensor nacheinander an wenigstens zwei Positionen in einem Bereich des Bauteils angeordnet wird und für die Erfassung an der jeweiligen Position das Radarsignal in Richtung des Bauteils aussendet,
- Berechnen eines Mittelwertes und/oder eines Medians für die an den wenigstens zwei Positionen erfassten Radardaten.

Auf diese Weise können individuelle Messfehler eliminiert werden, da der Mittelwert oder Median berechnet werden kann, um ein repräsentativeres Ergebnis zu erhalten. Außerdem können vorteilhaft Auswirkungen von Objekteffekten verringert werden, die einzelne Messungen beeinflusst haben könnten. Ferner kann die Robustheit zusätzlich erhöht werden, u.a. durch Reduktion des Rauschens.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Ebenfalls Gegenstand der Erfindung kann ein Ortungsgerät zum Bestimmen einer Zusammensetzung eines Bauteils sein, umfassend wenigstens einen Sensor und ein Display. Das Ortungsgerät kann ausgebildet ist, um das erfindungsgemäße Verfahren auszuführen. Der wenigstens eine Sensor ist insbesondere ein Radarsensor. Ferner kann das Ortungsgerät einen Positionssensor umfassen, beispielsweise um das Erfassen der Radardaten nacheinander an den wenigstens zwei Positionen an dem Bauteil durchzuführen.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, eines Ortungsgerätes mit einem Sensor und einem Display, einer Vorrichtung zur Datenverarbeitung, eines Speichermediums sowie eines Computerprogramms gemäß Ausführungsbeispielen der Erfindung,
- Fig. 2: eine schematische Darstellung eines Ortungsgerätes mit einem Sensor und einem Display sowie eines Bauteils mit mehreren Schichten.

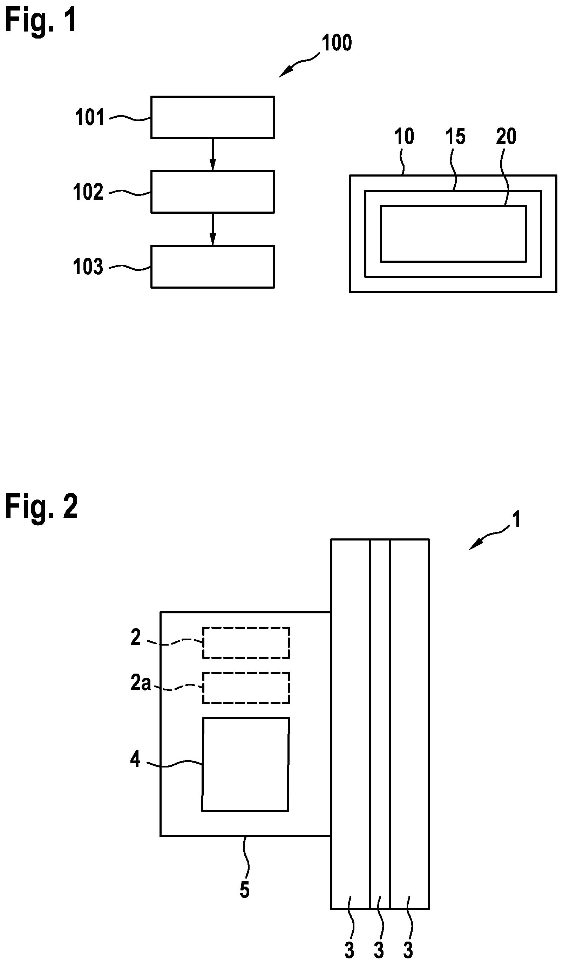

In Fig. 1 sind ein Verfahren 100, eine Vorrichtung zur Datenverarbeitung 10, ein Speichermedium 15 sowie ein Computerprogramm 20 gemäß Ausführungsbeispielen der Erfindung schematisch dargestellt.

Fig. 1 zeigt insbesondere ein Verfahren 100 zum Bestimmen einer Zusammensetzung eines Bauteils 1. In einem ersten Schritt 101 werden Radardaten bereitgestellt, wobei die Radardaten aus einer Erfassung eines Sensors 2 resultieren, wobei der Sensor 2 in einem Bereich des Bauteils 1 angeordnet ist und für die Erfassung ein Radarsignal in Richtung des Bauteils 1 aussendet. In einem zweiten Schritt 102 wird ein Analyseverfahren für das Bestimmen der Zusammensetzung des Bauteils 1 in Abhängigkeit von einer Dicke des Bauteils 1 und/oder einer Anzahl an Schichten 3 und/oder einer Dicke der Schichten 3 des Bauteils 1 ausgewählt. In einem dritten Schritt 103 wird die Zusammensetzung des Bauteils 1 unter Verwendung des ausgewählten Analyseverfahrens bestimmt. Das ausgewählte Analyseverfahren zum Bestimmen 103 der Zusammensetzung des Bauteils 1 umfasst dabei die folgenden Schritte:
- Detektieren wenigstens einer Reflexion auf Basis der bereitgestellten Radardaten,
- Bestimmen einer Permittivität und einer Dicke wenigstens einer Schicht 3 des Bauteils 1 auf Basis der wenigstens einen detektierten Reflexion,
- Bereitstellen einer Beschreibung der wenigstens einen Schicht 3 des Bauteils 1 auf Basis der bestimmten Permittivität und Dicke.

Fig. 2 zeigt schematisch ein Ortungsgerät 5 mit einem Sensor 2, der als ein Radarsensor ausgebildet ist, einem Positionssensor 2a, und einem Display 4 gemäß Ausführungsbeispielen der vorliegenden Erfindung. Das Ortungsgerät 5 ist an einem Bauteil 1 angeordnet, das mehrere Schichten 3 umfasst.

Es kann in Anwendungsfällen notwendig sein, neben einer Lokalisierung von Objekten auch Informationen über eine Zusammensetzung, insbesondere einen Aufbau oder Querschnitt, von Bauteilen wie beispielsweise Wände, Decken oder Böden zu erhalten. Im Speziellen kann das beispielsweise eine Dicke der Bauteile sein, um ein richtiges Werkzeug auszuwählen oder die Statik beurteilen zu können. Ferner kann eine Dicke von Dämmschichten ermittelt werden, um eine energetische Beurteilung vorzunehmen oder eine Dicke von schwimmendem Estrich, um eine mechanische Belastbarkeit zu evaluieren.

Die Erfindung beschreibt gemäß Ausführungsbeispielen ein Verfahren, mit dem zerstörungsfrei aus Radardaten Informationen über eine Zusammensetzung, insbesondere einen Querschnitt, eines Bauteils gewonnen und dargestellt werden kann. Ferner wird gemäß Ausführungsbeispielen ein Ortungsgerät mit einem Radarsensor, einer Datenverarbeitungsvorrichtung, einem Display und optional einem Positionssensor beschrieben. Die Funktion gemäß Ausführungsbeispielen kann auch in ein Radarortungsgerät integriert werden. Dabei besteht beispielsweise der Vorteil, dass zumindest Teile der notwendigen Hardware bereits vorhanden sind.

Im Folgenden wird eine Bestimmung der Zusammensetzung des Bauteils gemäß Ausführungsbeispielen beschrieben. Zunächst kann es erforderlich sein, geeignete Radardaten zu erheben, die repräsentativ für die Zusammensetzung des Bauteils sind. Dabei kann es auf dem Bauteil Positionen ohne Einfluss von Objekten geben. Diese sind insbesondere geeignet, um den die Zusammensetzung des Bauteils zu bestimmen. Der Einfluss von Objekten kann die Bestimmung der Zusammensetzung des Bauteils verfälschen. Im Allgemeinen ist jedoch beispielsweise nicht bekannt, ob Radardaten von einer bestimmten Position von Objekten beeinflusst sind. Es gibt verschiedene Möglichkeiten, um die gewünschten, unbeeinflussten Radardaten zu erhalten. Es kann eine Erkennung von durch Objekte beeinflusste Radardaten (Ortungsfunktion) erfolgen und diese Radardaten können für die hier betrachtete Funktion der Ermittlung der Zusammensetzung des Bauteils verworfen werden. Liegen mehrere Datensätze der Radardaten an unterschiedlichen Positionen vor, so kann der Median verwendet werden, um die Objekte auszublenden. Eine Voraussetzung kann dabei sein, dass mehr ungestörte Radardaten vorliegen als Radardaten, die durch Objekte gestört sind. Auch eine Mittelwertbildung kann den Einfluss von Objekten zumindest verringern, wenn nur wenige Radardaten durch Objekte gestört sind. Die beiden Methoden können auch kombiniert werden, so dass zunächst offensichtlich gestörte Radardaten entfernt und dann über einen Median evtl. verbleibende weniger gestörte Radardaten noch entfernt werden.

Es kann davon ausgegangen werden, dass sich die Zusammensetzung des Bauteils über die verschiedenen Positionen nicht wesentlich ändert. Dadurch kann zusätzlich der Mittelwert über die Radardaten verwendet werden. Dadurch kann die Robustheit zusätzlich erhöht werden, u.a. durch Reduktion des Rauschens.

Sind nun repräsentative Radardaten für die Zusammensetzung des Bauteils vorhanden, können diese weiterverarbeitet werden, um die gewünschten Informationen über die Zusammensetzung des Bauteils zu erhalten. Dazu gibt es verschiedene Möglichkeiten, insbesondere das erste und das zweite Analyseverfahren gemäß Ausführungsbeispielen der Erfindung. In einer ersten Möglichkeit, bzw. gemäß des ersten Analyseverfahrens gemäß der Erfindung, kann die Bestimmung der Zusammensetzung des Bauteils Schicht für Schicht erfolgen. Das Bauteil kann mehrere Schichten 1 bis n umfassen, mit den Dicken d₁ bis dₙ. Die Radardaten umfassen insbesondere Reflexionen r₁ bis rₙ aller Schichten. In dem Verfahren gemäß Ausführungsbeispielen kann zunächst eine Reflexion der ersten Schicht r₁ bestimmt werden. Aus r₁ kann nun die Permittivität der ersten Schicht epsᵣ₁ bestimmt werden. Nun kann aus den Radardaten eine Zeitdifferenz dt₁₂ zwischen der ersten und der zweiten Reflexion bestimmt werden, was insbesondere einer Reflexion an der Vorder- bzw. an der Rückseite der ersten Schicht entspricht. Aus epsᵣ₁ und dt₁₂ kann nun eine Dicke der ersten Schicht bestimmt werden. Zusätzlich kann epsᵣ₁ Hinweise auf ein Material der ersten Schicht geben. Im nächsten Schritt kann von den Radardaten die erste Schicht entfernt werden. Dies kann dadurch erzielt werden, dass die Streuparameter der ersten Schicht aus den bestimmten Permittivitäten epsᵣ₁ und d₁ analytisch bestimmt werden und diese dann nach dem Verfahren der verketteten Streuparameter von den Ausgangs-Radardaten abgezogen werden. Übrig bleiben insbesondere Radardaten, die der Zusammensetzung des Bauteils ohne die erste Schicht entsprechen. Nun kann mit diesen Radardaten weiterverfahren werden wie ursprünglich mit der ersten Schicht und so die Parameter der zweiten Schicht bestimmt werden. Dies kann so lange fortgeführt werden, bis ein Abbruchkriterium erfüllt ist. Das Abbruchkriterium kann z.B. eine vorher definiert maximale Anzahl an Schichten sein und/oder ein Kriterium abhängig von der Größe der verbleibenden Radardaten nach Abzug aller bis dahin bestimmter Schichten.

Eine weitere Möglichkeit ist insbesondere gemäß des zweiten Analyseverfahrens gemäß der Erfindung eine iterative Schätzung der Zusammensetzung des Bauteils. Dazu kann zunächst ein Startpunkt definiert werden, d.h. eine vermutete Zusammensetzung des Bauteils mit n Schichten und den Permittivitäten eps_{r1..n} und den Schichtdicken d_{1..n}. Von jeder Schicht können nun die Streuparameter berechnet werden und durch Verkettung wiederum theoretische Radardaten dieser Zusammensetzung des Bauteils. Durch Vergleich mit den gemessenen Radardaten kann nun ein Fehlermaß bestimmt werden. Im Weiteren kann nun aus dem Fehlermaß eine Laufrichtung bestimmt werden, d.h. eine Veränderung der vermuteten Zusammensetzung des Bauteils, die zu einer Verringerung des Fehlers führt. Dies kann fortgeführt werden, bis der Fehler unter ein definiertes Maximum fällt. Alternativ können unter Einsatz von mehr Rechenleistung der Fehler mehrerer unterschiedlicher Parametersätze (vermutete Zusammensetzungen des Bauteils) berechnet werden und dieser Vorgang jeweils ausgehend vom aktuellen Parametersatz mit dem kleinsten Fehler solange fortgesetzt werden, bis wiederum ein Abbruchkriterium erfüllt ist, beispielsweise wenn der Fehler unter einem definiertem Maximum ist oder wenn eine kleinste Veränderung im Parametersatz erreicht ist.

Bei dem zweiten Analyseverfahren gemäß der Erfindung kann sich die Schwierigkeit ergeben, dass viele Parameter auf einmal betrachtet werden müssen. Dieses kann sich daher eher für Fälle eignen, bei denen schon eine Vorabinformation vorhanden ist und es sich um wenige Schichten handelt. Zudem kann es dann Vorteile haben, wenn die Zusammensetzung des Bauteils derart dünne Schichten enthält, dass diese von dem Radarsensor nicht mehr aufgelöst werden können. Dies kann problematisch für das ersten Analyseverfahren gemäß der Erfindung sein. Auf Basis dieser Aspekte kann eines der Analyseverfahren ausgewählt werden.

Ferner kann die Zusammensetzung des Bauteils auf einem Display angezeigt werden. Dabei kann die Zusammensetzung des Bauteils im Querschnitt angezeigt und relevante Daten ergänzt werden, zumindest eine Dicke jeder Schicht und optional eine Permittivität oder daraus abgeleitet ein Material einer jeweiligen Schicht.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Bestimmen einer Zusammensetzung eines Bauteils (1), umfassend die nachfolgenden Schritte:
- Bereitstellen (101) von Radardaten, wobei die Radardaten aus einer Erfassung eines Sensors (2) resultieren, wobei der Sensor (2) in einem Bereich des Bauteils (1) angeordnet ist und für die Erfassung ein Radarsignal in Richtung des Bauteils (1) aussendet,
- Auswählen (102) eines Analyseverfahrens für das Bestimmen der Zusammensetzung des Bauteils (1) in Abhängigkeit von einer Dicke des Bauteils (1) und/oder einer Anzahl an Schichten (3) und/oder einer Dicke der Schichten (3) des Bauteils (1),
- Bestimmen (103) der Zusammensetzung des Bauteils (1) unter Verwendung des ausgewählten Analyseverfahrens,
wobei das ausgewählte Analyseverfahren zum Bestimmen (103) der Zusammensetzung des Bauteils (1) die folgenden Schritte umfasst:
- Detektieren wenigstens einer Reflexion auf Basis der bereitgestellten Radardaten,
- Bestimmen einer Permittivität und einer Dicke wenigstens einer Schicht (3) des Bauteils (1) auf Basis der detektierten wenigstens einen Reflexion,
- Bereitstellen einer Beschreibung der wenigstens einen Schicht (3) des Bauteils (1) auf Basis der bestimmten Permittivität und Dicke.

2. Verfahren (100) nach Anspruch 1,
**dadurch gekennzeichnet,**
**dass** das Verfahren (100) ferner den folgenden Schritt umfasst:
- Initiieren einer Anzeige der bestimmten Zusammenfassung auf einem Display (4), wobei die Anzeige zumindest die Dicke des Bauteils (1) und/oder die Anzahl an Schichten (3) und/oder die Dicke der Schichten (3) des Bauteils (1) umfasst, wobei die Anzeige vorzugsweise ferner eine Permittivität einer jeweiligen Schicht (3) und/oder ein auf Basis der Permittivität ermitteltes Material der jeweiligen Schicht (3) umfasst.

3. Verfahren (100) nach einem der vorhergehenden Ansprüche, **dadurch gekennzeichnet,**
**dass** ein erstes Analyseverfahren für das Auswählen (102) die folgenden Schritte umfasst:
- Bestimmen einer Reflexion einer ersten Schicht (3) des Bauteils (1),
- Bestimmen einer Permittivität der ersten Schicht (3) auf Basis der bestimmten Reflexion,
- Ermitteln einer Zeitdifferenz zwischen der ersten und einer zweiten Reflexion,
- Bestimmen einer Dicke der ersten Schicht (3) auf Basis der bestimmten Permittivität und der ermittelten Zeitdifferenz,
- Entfernen eines Anteils der Radardaten, welcher die erste Schicht (3) repräsentiert, indem Streuparameter der ersten Schicht (3) auf Basis der bestimmten Permittivität und der Dicke der ersten Schicht (3) bestimmt werden und diese anschließend von verketteten Streuparametern der Radardaten abgezogen werden, um Radardaten zu erhalten, die die Zusammensetzung des Bauteils (1) ohne die erste Schicht (3) repräsentieren,
wobei die Schritte für weitere Schichten (3) des Bauteils (1) wiederholt werden, bis ein definiertes Abbruchkriterium erfüllt ist.

4. Verfahren (100) nach Anspruch 3,
**dadurch gekennzeichnet,**
**dass** auf Basis der bestimmten Permittivität zusätzlich ein Material der jeweiligen Schicht (3) ermittelt wird.

5. Verfahren (100) nach einem Ansprüche 3 oder 4,
**dadurch gekennzeichnet,**
**dass** das Abbruchkriterium eine vorher definierte maximale Anzahl an Schichten (3) ist und/oder ein Kriterium abhängig von einer Größe der verbleibenden Radardaten nach Abzug aller bis dahin analysierten Schichten (3) ist.

6. Verfahren (100) nach einem der vorhergehenden Ansprüche,
**dadurch gekennzeichnet,**
**dass** ein zweites Analyseverfahren für das Auswählen (102) die folgenden Schritte umfasst:
- Definieren eines Startpunktes, wobei der Startpunkt eine vermutete Zusammensetzung des Bauteils (1) mit einer definierten Anzahl an Schichten (3) mit jeweiligen Permittivitäten Dicken der Schichten (3) ist,
- Berechnen von Streuparametern jeder Schicht (3) und Verketten der berechneten Streuparameter, um theoretische Radardaten des Startpunktes zu erhalten,
- Vergleichen der theoretischen Radardaten mit den bereitgestellten Radardaten, um einen Fehler zu bestimmen,
- Bestimmen einer Laufrichtung auf Basis des bestimmten Fehlers, wobei die Laufrichtung eine Veränderung des Startpunktes repräsentiert, die zu einer Verringerung des Fehlers führt, wobei die Schritte durchgeführt werden, bis der Fehler unter ein definiertes Maximum fällt.

7. Verfahren (100) nach Anspruch 6,
**dadurch gekennzeichnet,**
**dass** mehrere Startpunkte definiert werden und ein jeweiliger Fehler der definierten Startpunkte berechnet wird, wobei ausgehend von einem Startpunkt mit einem kleinsten berechneten Fehler die Schritte des Berechnens der Streuparameter, des Vergleichens der theoretischen Radardaten mit den bereitgestellten Radardaten und des Bestimmens der Laufrichtung durchgeführt werden, bis der Fehler unter das definierte Maximum fällt.

8. Verfahren (100) nach einem der vorhergehenden Ansprüche,
**dadurch gekennzeichnet,**
**dass** das Bereitstellen (101) der Radardaten die folgenden Schritte umfasst:
- Erfassen der Radardaten unter Verwendung des Sensors (2), wobei der Sensor (2) in einem Bereich des Bauteils (1) angeordnet ist und für die Erfassung das Radarsignal in Richtung des Bauteils (1) aussendet,
- Analysieren der erfassten Radardaten, um eine Objektdetektion in dem Bauteil (1) durchzuführen,
- Verwerfen der erfassten Radardaten, wenn ein Ergebnis der Analyse indiziert, dass ein Objekt detektiert wurde.

9. Verfahren (100) nach einem der vorhergehenden Ansprüche,
**dadurch gekennzeichnet,**
**dass** das Bereitstellen (101) der Radardaten die folgenden Schritte umfasst:
- Erfassen der Radardaten unter Verwendung des Sensors (2), wobei der Sensor (2) nacheinander an wenigstens zwei Positionen in einem Bereich des Bauteils (1) angeordnet wird und für die Erfassung an der jeweiligen Position das Radarsignal in Richtung des Bauteils (1) aussendet,
- Berechnen eines Mittelwertes und/oder eines Medians für die an den wenigstens zwei Positionen erfassten Radardaten.

10. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

11. Vorrichtung (10) zur Datenverarbeitung, die eingerichtet ist, das Verfahren (100) nach einem der Ansprüche 1 bis 9 auszuführen.

12. Computerlesbares Speichermedium (15), umfassend Befehle, die bei der Ausführung durch einen Computer (10) diesen veranlassen, die Schritte des Verfahrens (100) nach einem der Ansprüche 1 bis 9 auszuführen.

13. Ortungsgerät (5) zum Bestimmen einer Zusammensetzung eines Bauteils (1), umfassend wenigstens einen Sensor (5) und ein Display (4), wobei das Ortungsgerät (5) ausgebildet ist, um das Verfahren nach einem der Ansprüche 1 bis 9 auszuführen.
